# EUROPEAN PATENT APPLICATION

(11) **EP 2 131 268 A1**
(43) Date of publication of application: **09.12.2009**
(21) Application number: 08275022.5
(22) Date of filing: 04.06.2008
(51) Int. Cl.: G06F 3/033, G06K 9/32

(54) **Vehicle System, Ground Vehicle and Base Unit**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The present invention relates to a vehicle system 10 which comprises a ground vehicle 12 and a base unit 14. A drive mechanism 16 is capable of driving the vehicle in each of a plurality of orientations relative to the ground surface 18. An image generator 20 receives an optical image and generating an image signal corresponding to the optical image. The image signal is transmitted to the base unit 14 so that the optical image can be displayed on a display 22 of the base unit. An orientation sensor 34 senses the orientation of the vehicle and generates an orientation signal corresponding to the orientation. Processing means 26 of base unit 14 processes the image signal according to the orientation signal so that an upright optical image can be displayed by the display 22 independent of an orientation of said vehicle.

## Description

### Field of the Invention

This invention relates to a vehicle system comprising a ground vehicle and a base unit. The invention also relates to a ground vehicle and to a base unit.

### Background of the Invention

Known vehicle systems comprise a ground vehicle and a base unit for communication with the vehicle. The ground vehicle may comprise a drive mechanism operable for driving the vehicle along a ground surface in each of a plurality of orientations relative to the ground surface. If an image generator were to be provided on the vehicle for receiving an image and generating an image signal corresponding to that image, then a display of the base unit would display that image upside down if the vehicle were inverted.

### Summary of the Invention

According to the present invention there is provided a vehicle system comprising:
a ground vehicle and a base unit for communication with the vehicle;
wherein said vehicle comprises:
a drive mechanism operable for driving the vehicle along a ground surface in each of a plurality of orientations relative to the ground surface;
an orientation sensor for sensing said orientation and generating an orientation signal corresponding to said orientation; and
an image generator for receiving an image and generating an image signal corresponding to said image;
wherein said base unit comprises:
a display for displaying an optical image according to said image signal; and
wherein said system comprises processing means for processing said image signal according to said orientation signal so that an upright optical image can be displayed by said display independent of an orientation of said vehicle.

The present invention also provides a ground vehicle comprising:
a drive mechanism operable for driving the vehicle along a ground surface in each of a plurality of orientations relative to the ground surface;
an orientation sensor for sensing said orientation and generating an orientation signal corresponding to said orientation; and
an image generator for receiving an image and generating an image signal corresponding to said image; and
processing means for processing for processing said image signal according to said orientation signal so that an upright optical image corresponding to said image can be displayed by a display of a base unit independent of an orientation of said vehicle.

The present invention also provides a base unit for communication with a ground vehicle, said base unit comprising:
a display for displaying an optical image according to an image signal generated by said vehicle; and
processing means for receiving said image signal and an orientation signal from said vehicle, said orientation signal corresponding to one of a plurality of orientations of said vehicle relative to a ground surface;
wherein said processing means is for processing said image signal according to said orientation signal so that an upright optical image can be displayed by said display independent of an orientation of said vehicle.

Other preferred and/or optional features of the invention are defined in the accompanying claims.

In order that the present invention may be well understood some embodiments thereof, which are given by way of example only, will now be described with reference to the accompanying drawings, in which:-

### Brief Description of the Drawings

Figure 1 is a schematic representation of a vehicle system with a ground vehicle in a first orientation;
Figure 2 is a schematic representation of the vehicle system shown in Figure 1 with the ground vehicle in a second orientation;
Figure 3 is a more detailed drawing of a vehicle of the system shown in Figure 1;
Figure 4 is a schematic representation of another vehicle system;
Figure 5 is a more detailed view of another vehicle; and
Figures 6 and 7 show a further vehicle.

### Detailed Description of the illustrated embodiments

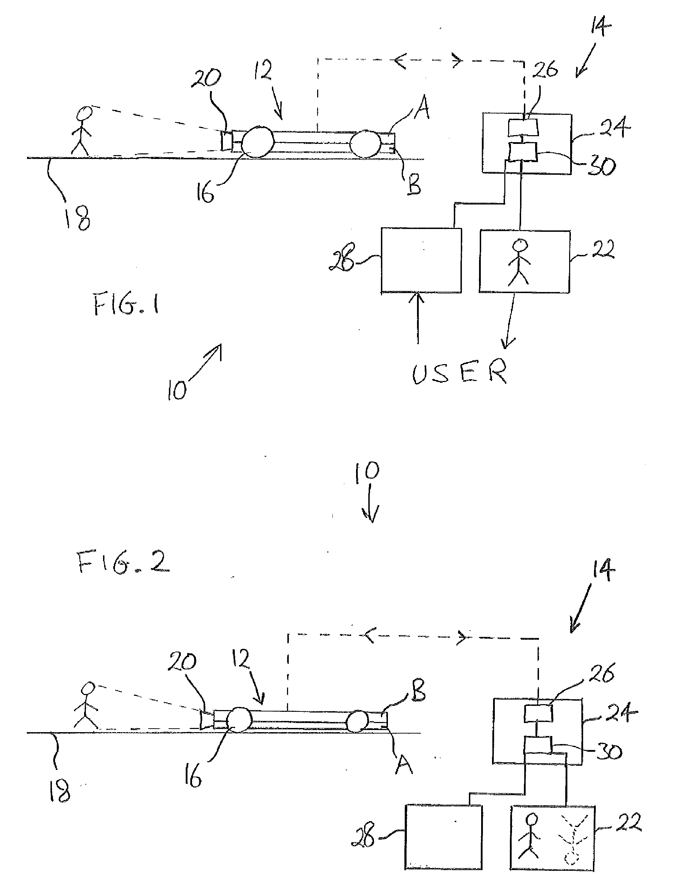

Referring to Figure 1, a vehicle system 10 is shown which comprises a ground vehicle 12 and a base unit 14. The vehicle and the base unit can communicate with each other generally, so that a user at the base unit can control movement of the vehicle and images captured by the vehicle can be displaced to the user at the base unit. The images captured by the vehicle may be an optical image of the surroundings proximate to the vehicle or may be a thermal image captured by an image generator having a thermal sensing capability.

The vehicle 12 comprises a drive mechanism including wheels 16 operable for driving the vehicle along a ground surface 18. The drive mechanism in this embodiment comprises (not shown) four electric motors arranged so that one motor rotates each wheel. At least two of the wheels are dirigible. A rotary encoder may be used for controlling rotation of each of the wheels. As an alternative to wheels, a track mechanism may be adopted.

The wheels 16 have a diameter which is larger than the height of the vehicle body and are arranged so that the drive mechanism is capable of driving the vehicle in each of two orientations relative to the ground surface 18. In a first orientation shown in Figure 1, a first portion A of the vehicle body is uppermost, and a second portion B of the vehicle body is lowermost. As shown in Figure 2, the vehicle is in a second orientation in which the vehicle is generally inverted from said first orientation so that first body portion A is lowermost and second body portion B is uppermost. In this regard, the vehicle has been rotated through approximately 180° about a central longitudinal axis of the vehicle. In either the first or the second orientation, the wheels 16 can engage the ground surface 18 and can therefore apply an impulse for propelling the vehicle in a desired direction.

Vehicle 12 is therefore capable of traversing relatively rough terrain and overcoming obstacles such as shear drops since which ever way the vehicle is orientated (as in Figure 1 or as in Figure 2) it can still be driven. For example, the vehicle may be driven over a shear drop and whichever way the vehicle lands, it can still be driven as required. The vehicle is also of entering and inspecting pipes, such as oil pipe lines.

The vehicle 12 is unmanned and may be sized approximately 60cm in length by 40cm in width by 15cm in height. However, the vehicle is not restricted to these dimensions and can be of any suitable size. As the vehicle is unmanned, it is suitable for carrying out tasks for which it is not possible, inhospitable or dangerous for people to undertake. Additionally, if the vehicle is sized as indicated above, the vehicle is relatively inconspicuous and can be used as a scout taking up an advanced position.

In this embodiment, the vehicle 12 comprises an image generator 20 for receiving an optical image and generating an image signal corresponding to the optical image. An image generator for generating a thermal image may additionally or alternatively be adopted. In Figures 1 and 2 for example, the optical image is of a person standing in front of the vehicle. The image generator 20 may be a digital video camera so that the image signal generated is a video signal corresponding to a real time optical video image as viewed from the perspective of the vehicle.

The vehicle 12 comprises communication means 32 (not shown in Figures 1 and 2) for transmitting image signals to the base unit 14 and for receiving control signals from the base unit for controlling the vehicle. The communication means may be an RF transceiver to allow wireless communication between the vehicle 12 and the base unit 14 as indicated by the broken line in Figures 1 and 2. The image signal is transmitted to the base unit 14 so that the optical image captured by the image generator 20 can be displayed on a display 22 of the base unit. For example in Figures 1 and 2, the optical image displayed on display 22 is the person standing in front of the vehicle. A user, such as a human operator, can use the displayed optical image to derive information about the environment external to the vehicle and for controlling the vehicle.

In Figures 1 and 2, the base unit 14 comprises a computer 24 which can receive the incoming image signal from the vehicle 12 for display as an optical image on display 22. The computer comprises communication means 26, such as an RF transceiver, for receiving image signals from the vehicle 12.

The base unit 14 further comprises a control 26, which may be a joy-stick or other input device such as cursor keys on a laptop computer, for receiving a control input from a user and for generating a control signal according to the control input. The communication means 26 can transmit the control signal to the vehicle 12 for controlling the drive mechanism in order to control movement of the vehicle. In this way, the user can control movement of the vehicle.

The image generator 20 is fixed relative to the vehicle. In the first orientation of the vehicle 12 shown in Figure 1, the image signal generated by the image generator 20 can be displayed upright on display 22 without a requirement for processing the image signal. The term "upright" in this context means that the user sees the optical view captured by the image generator on the display as if the user were standing at the position of the vehicle. In other words, an upper portion of the optical image is displayed at an upper portion of the display and a lower portion of the optical image is displayed at a lower portion of the display.

However, when the vehicle is in the second orientation as shown in Figure 2, (i.e. when the vehicle is inverted) the image signal generated by the image generator 20 cannot be displayed upright on display 22 without first processing the image signal. For explanatory purpose, without processing, an optical image as shown in broken lines would be shown on display 22. Such an incorrect optical image is rotated through 180° from a correct upright image. In order to generate an upright image as shown in solid lines on the display 22 in Figure 2, the image signal must be processed by processing means 30 according to the orientation of the vehicle.

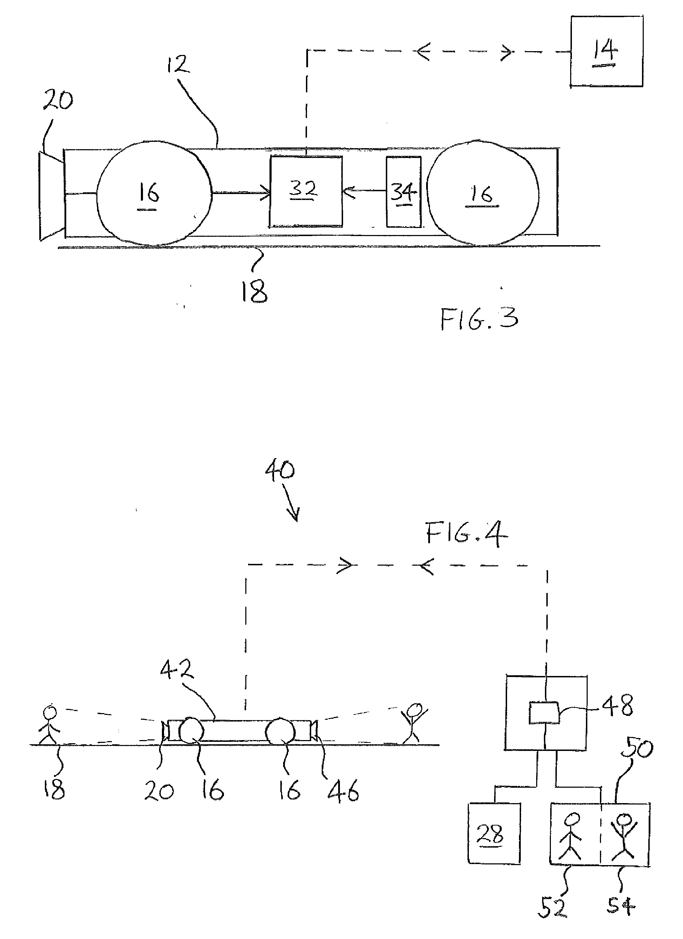

Vehicle 12 is shown in more detail in Figure 3 and comprises communication means 32 as described above. The image generator 20 transmits the image signal to communication means 32 for communication to the base unit 14 as shown by broken lines. The vehicle comprises an orientation sensor 34 for sensing the orientation of the vehicle and generating an orientation signal corresponding to the orientation. For instance, if the vehicle 12 can be orientated in two orientations as shown in Figures 1 and 2 at 180° one from the other, the orientation signal may be binary '1' for the first orientation and binary '0' for the second orientation. If the vehicle can be orientated in more than two orientations then more than two orientation signals are required. The orientation sensor may comprise any suitable means for sensing the orientation of the vehicle, such as a gravity switch for sensing an orientation of the vehicle relative to a gravitational force. A mercury switch is suitable for the purpose.

The orientation signal is transmitted, together with the image signal, by communication means 32 to the base unit 14. Processing means 26 of base unit 14 processes the image signal according to the orientation signal so that an upright optical image can be displayed by the display 22 independent of an orientation of said vehicle. In the example of Figures 1 and 2, the processing means 26 processes the image signal so that when the image signal is displayed as an optical image on the display 22, the optical image is inverted if the orientation sensor 34 senses that the vehicle is in the second orientation (i.e. the orientation signal is a binary '0'). Accordingly, an optical image captured by the image generator 20, which would without processing being displayed upside down on the display, is inverted so that the user can view a corrected upright image. If the orientation sensor 34 senses that the vehicle is in the first orientation (i.e. the orientation signal is a binary '1'), the processing means is not required to process the image signal and an optical image can be displayed in an upright condition by the display without correction.

The processing means may be a processor of a computer or a PLC programmed so that the image signal is inverted when the orientation signal is binary '0'.

The user may be out of sight of the vehicle 12 and accordingly relies on the optical image on the display 22 in order to control movement of the vehicle. As detailed above, the displayed optical image is upright independent of the orientation of the vehicle. However, without selective processing of the control signal a control input to the control 28 would produce a first movement of the vehicle when the vehicle is in a first orientation and a second, dissimilar, movement of the vehicle when the vehicle is in the second orientation. For instance, if a control input is 'forward' (e.g. by pushing a stick lever of control 28 forward) then in the first orientation as shown in Figure 1, the vehicle moves forward and in the second orientation as shown in Figure 2, the vehicle would move backwards. Accordingly, the control input according to embodiments of the invention is processed according to the orientation signal so that movement of the vehicle 12 corresponds to the control input independent of the orientation of the vehicle. A processing means achieves processing of the control signal. Such processing means may be integral with the processing means 26 for processing the image signal or may be a separate processing means. For instance, one processing means may be situated in the vehicle and one processing means may be situated in the base unit, or both processing means may be situated in the vehicle or in the base unit.

In the example shown in Figures 1 and 2, the image signal processor and the control signal processor are conveniently integrated in processor 26 and provided in computer 24. In this way, the orientation signal may be stored in a single memory for retrieval in processing the control signal and the image signal. When the orientation sensor 34 senses that the vehicle is in the first orientation (the orientation signal is binary '1'), the drive mechanism is driven according to the control signal to produce movement of the vehicle which corresponds to the control input. When the orientation sensor 34 senses that the vehicle is in the second orientation (the orientation signal is binary '0'), the processing means processes the control signal so that the drive mechanism is driven according to an inverse of the control signal to produce movement of the vehicle which corresponds to the control input.

As both of the control signal and image signal are corrected according to the orientation of the vehicle 12, a user can input a control input to the control 28 according to a displayed optical image on the display 22 for producing movement of the vehicle 12 corresponding to the control input independent of an orientation of the vehicle. Accordingly, a user is not required to make corrections to a control image or a displayed image in his or her own mind. Instead, the user can operate the vehicle even in some cases without any knowledge of the actual orientation of the vehicle, which greatly enhances usability of the vehicle system. Such an arrangement is especially useful when untrained or inexperienced users operate the vehicle.

Referring to Figure 4, the vehicle system 40 comprises a vehicle 42 and a base unit 44. Where applicable like reference numerals have been used in Figure 4 to indicate like features as shown in Figures 1 and 2. For brevity, those features common to system 10 and system 40 will be omitted in the description of system 40. The vehicle 42 comprises two image generators 20, 46. A first image generator 20 is positioned for receiving a first optical image from in front of the vehicle 42 and a second image generator 46 is positioned for receiving a second optical image from behind the vehicle. Although two image generators are shown in Figure 4, more than two image generators may be adopted as required.

The first image generator 20 generates a first image signal corresponding to the first optical image and the second image generator 46 generates a second image signal corresponding to the second optical image. The processing means 48 processes the first image signal and the second image signal according to the orientation signal so that upright first and second optical images can be displayed by the display 50 independent of an orientation of the vehicle. The first and the second optical images are displayed respectively in first portion 52 and second portion 54 of the display 50.

The user can use image generator 20 for observing an area in front of the vehicle 42 and image generator 46 for observing an area behind the vehicle. If the user wishes to reverse directions, the image generator 46 can be used to observe an area in advance of the vehicle's path and the image generator can be used to observe an area behind the vehicle's path. Optionally, the control 28 may comprises a switch (not shown) operable by the user. In a first position of the switch, a control input controls movement of the vehicle with respect to the first image generator 20. That is, a control input (e.g. forward, backward, left, right) produces a corresponding movement as viewed by the user in the first portion 52 of the display. In a second position of the switch, a control input controls movement of the vehicle 42 with respect to the second image generator 46. Such a switch allows more versatile and user friendly operation of the vehicle.

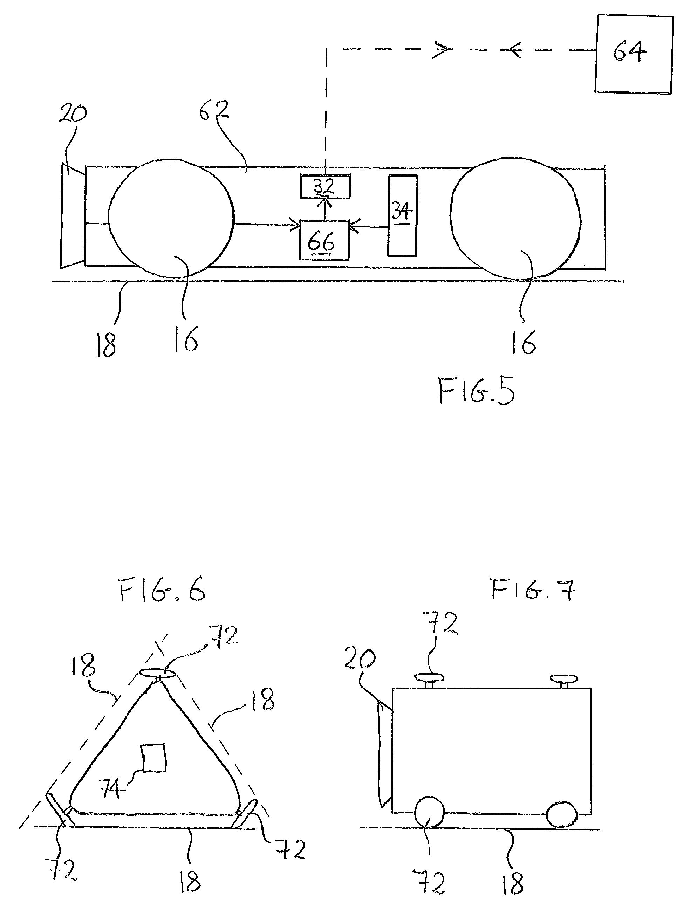

Referring to Figure 5, the vehicle system 60 comprises a vehicle 62 and a base unit 64. Where applicable like reference numerals have been used in Figure 4 to indicate like features as shown in Figures 1 and 2. For brevity, further in depth discussion of those features common to system 60 and system 10 will be omitted in the description of system 60.

The ground vehicle 62 comprises a drive mechanism including wheels 16, an orientation sensor 34 and an image generator 20. Processing means 66 processes the image signal received from the image generator according to the orientation signal received from the orientation sensor so that an upright optical image can be displayed by a display of the base unit independent of an orientation of the vehicle. The processing means 66, which may be a PLC, transmits a processed image signal to communication means 32 for communication with the base unit 64. Processing means 66 is similar to previously described processing means 26 except that the former is situated in the vehicle and not in the base unit. Advantageously, vehicle 62 can communicate and allow for correct upright display of optical images in a base unit which need not be specifically adapted for use with such a vehicle, since processing takes place in the vehicle prior to communication with the base unit. For instance, the base unit 64 may comprise a standard laptop computer.

Additionally, processing means 66 may be configured for processing a control signal received from the base unit 64 according to the orientation signal so that movement of the vehicle 52 corresponds to a control input by a user to the base unit. Accordingly, the base unit does not have to specially adapted for controlling the vehicle in multiple orientations.

Ground vehicle 62 may additionally comprise multiple image generators as described with reference to Figure 4, wherein each optical image captured by each image generator can be displayed on a display of the base unit 64.

Referring to Figures 6 and 7, a ground vehicle 70 is shown. Where applicable like reference numerals have been used in Figures 6 and 7 to indicate like features as shown in Figures 1 and 2. For brevity, further in depth discussion of those features common to vehicle 70 and system 10 will be omitted in the description of vehicle 70.

Vehicle 70 comprises a drive mechanism, including wheels 72, operable for driving the vehicle along a ground surface in each of three orientations relative to the ground surface 18. A first orientation is shown in Figure 6 relative to a ground surface 18 shown in a solid line. Second and third orientations are shown by the ground surface 18 represented by two broken lines.

Orientation sensor 74 senses when the vehicle 70 is in each of the three orientations relative to the ground surface 18 and generates an orientation signal corresponding to the orientation. An image generator 20 receives an optical image and generates an image signal corresponding to the optical image. Processing means processes the image signal according to the orientation signal so that an upright optical image can be displayed by a display of a base unit independent of an orientation of the vehicle. In the first orientation of the vehicle, a displayed image does not require correction. In a second orientation of the vehicle, the displayed image requires clockwise rotation through 120° and in a third orientation of the vehicle, the displayed image requires counter-clockwise rotation by 120°. The processing means processes the image signal so that the required correction to the displayed image is obtained.

The invention has been described by way of several embodiment, with modifications and alternatives, but having read and understood this description further embodiments and modifications will be apparent to those skilled in the art. All such embodiments and modifications are intended to fall within the scope of the present invention as defined in the accompanying claims.

## Claims

1. A vehicle system comprising:
a ground vehicle and a base unit for communication with the vehicle;
wherein said vehicle comprises:
a drive mechanism operable for driving the vehicle along a ground surface in each of a plurality of orientations relative to the ground surface;
an orientation sensor for sensing said orientation and generating an orientation signal corresponding to said orientation; and
an image generator for receiving an image and generating an image signal corresponding to said image;
wherein said base unit comprises:
a display for displaying an optical image according to said image signal; and
wherein said system comprises processing means for processing said image signal according to said orientation signal so that an upright optical image can be displayed by said display independent of an orientation of said vehicle.

2. A system as claimed in claim 1, wherein said plurality of orientations includes a first orientation and a second orientation in which the vehicle is generally inverted from said first orientation.

3. A system as claimed in claim 1 or 2, wherein said orientation sensor comprises a gravity switch for sensing an orientation of the vehicle relative to a gravitational force.

4. A system as claimed in any preceding claim, wherein said image generator is fixed relative to the vehicle.

5. A system as claimed in any preceding claim when dependent on claim 2, wherein when said orientation sensor senses that said vehicle is in said first orientation said display can display an upright optical image without said image signal being processed by said processing means and wherein when orientation sensor senses that said vehicle is in said second orientation said image signal is processing by said processing means according to the orientation signal so that said display displays an inverted optical image.

6. A system as claimed in claim any preceding claim, wherein said base unit comprises a control for receiving a control input from a user and for generating a control signal according to said control input and
wherein said control signal is transmitted to said vehicle for controlling said drive mechanism in order to control movement of said vehicle.

7. A system as claimed in claim 6, wherein said processing means processes said control signal according to said orientation signal so that movement of said vehicle corresponds to said control input.

8. A system as claimed in claim 7 when claim 7 is dependent on claim 2, wherein in said first orientation said drive mechanism is driven according to said control signal to produce movement of said vehicle which corresponds to said control input and in said second orientation said processing means processes said control signal according to the orientation signal so that the drive mechanism is driven according to an inverse of said control signal to produce movement of said vehicle which corresponds to said control input.

9. A system as claimed in any of claims 6 to 8, wherein a user can input a said control input to said control according to a displayed optical image on said display for producing movement of said vehicle corresponding to said control input independent of an orientation of said vehicle.

10. A system as claimed in any preceding claim, wherein said vehicle comprises two said image generators, and wherein a first of said image generators is for receiving a first image from in front of said vehicle and a second of said image generators is for receiving a second image from behind said vehicle.

11. A system as claimed in claim 10, wherein said first image generator generates a first image signal corresponding to said first image and said second image generator generates an image signal corresponding to said second image; and
wherein said processing means is for processing said first image signal and said second image signal according to said orientation signal so that an upright first and second optical images can be displayed by said display independent of an orientation of said vehicle.

12. A ground vehicle comprising:
a drive mechanism operable for driving the vehicle along a ground surface in each of a plurality of orientations relative to the ground surface;
an orientation sensor for sensing said orientation and generating an orientation signal corresponding to said orientation; and
an image generator for receiving an image and generating an image signal corresponding to said image; and
processing means for processing for processing said image signal according to said orientation signal so that an upright optical image corresponding to said image can be displayed by a display of a base unit independent of an orientation of said vehicle.

13. A base unit for communication with a ground vehicle, said base unit comprising:
a display for displaying an optical image according to an image signal generated by said vehicle; and
processing means for receiving said image signal and an orientation signal from said vehicle, said orientation signal corresponding to one of a plurality of orientations of said vehicle relative to a ground surface;
wherein said processing means is for processing said image signal according to said orientation signal so that an upright optical image can be displayed by said display independent of an orientation of said vehicle.
